# EUROPÄISCHE PATENTSCHRIFT

(11) **EP 0 348 691 B1**
(45) Veröffentlichungstag und Bekanntmachung des Hinweises auf die Patenterteilung: **16.03.1994**
(21) Anmeldenummer: 89110084.4
(22) Anmeldetag: 03.06.1989
(51) Int. Cl.: B60Q 1/52

(54) **Verfahren und Vorrichtung zur haptischen Anzeige der Abstandswarnung im Kraftfahrzeug**
Method and device for tactile distance alarm in a motor vehicle
Procédé et dispositif d'alarme tactile de distance dans un véhicule

(30) Priorität: 01.07.1988 DE 3822193
(43) Veröffentlichungstag der Anmeldung: 03.01.1990
(73) Patentinhaber: ROBERT BOSCH GMBH, 70442 Stuttgart (DE)
(72) Erfinder: Geiser, Georg, Dr.-Ing., D-7500 Karlsruhe 1 (DE)

(56) Entgegenhaltungen:
- DE-A- 2 555 429
- DE-A- 3 332 664

## Beschreibung

Die Erfindung betrifft ein Verfahren mit einer Vorrichtung zur Darstellung der Abstandswarnung im Kraftfahrzeug mit einer haptischen Anzeige, d.h. einer Anzeige, welche die taktile oder kinästhetische Sinnesmodalität des Kraftfahrers anspricht.

Zur Unterstützung des Fahrers sind Abstandswarnsysteme in Entwicklung, die aus einem Sensorsystem (z.B. Radar), einer Auswerteeinheit und einer Anzeige bestehen. Bisher wurden optische und/oder akustische Anzeigen vorgeschlagen und teilweise realisiert, die dem Fahrer den Abstand von einem Hindernis in analoger oder mehrstufiger Form anzeigen. Diese optischen und akustischen Anzeigen haben den Nachteil, daß sie die visuelle Informationsaufnahme und -verarbeitung des Fahrers zusätzlich belasten, obwohl dieser durch direktes Beobachten des Verkehrsgeschehens und durch Steuer- und Regelaufgaben bereits stark gefordert wird.

Ferner existieren Vorschläge, eine haptische Anzeige der Abstandswarnung beim Unterschreiten des Sicherheitsabstandes dadurch zu realisieren, daß über das Gaspedal eine sprungförmige oder pulsierende Gegenkraft auf den Fuß des Fahrers eingekoppelt wird. Diese Form der haptischen Anzeige weist den Nachteil auf, daß sie nur wirkt, wenn der rechte Fuß des Fahrers das Gaspedal berührt.

Ein Verfahren für die zuvor beschriebene taktile Anzeige ist aus der DE-OS 25 55 429 bekannt.

Aus der EP 0 210 079 A2 ist ein Fahrzeugradarsystem bekannt, das zur Vermeidung einer Fahrzeugkollision bei Erreichen eines bestimmten Gefahrenzustandes nicht nur ein akustisches Signal erzeugt, sondern auch ein Signal zur Aktivierung der Bremsen. Zur Bewertung der Gefahrensituation werden die Faktoren Fahrzeugabstand zu einem Objekt, Fahrzeuggeschwindigkeit und Änderungsgeschwindigkeit zum Objekt zugrundegelegt. Die auch von weiteren Sensoren gemessenen Werte werden zusammen mit den Radarsignalen gewichtet. Wird durch die Wichtung eine kritische Situation detektiert, können Bremssignale für das Fahrzeug erzeugt werden.

Der Erfindung liegt die Aufgabe zugrunde, ein Verfahren mit einer Vorrichtung zur Anzeige der Abstandswarnung zu entwickeln, das die genannten Nachteile vermeidet. Diese Aufgabe wird erfindungsgemäß durch die kennzeichnenden Merkmale des Hauptanspruchs gelöst, indem eine haptische Anzeige in Form der Erschütterung eines Teiles des Fahrzeuges verwendet wird, die vom Fahrer wahrgenommen werden kann, ohne daß er seine Sinnesorgane speziell darauf ausrichtet und ohne daß ein Körperteil in eine spezielle Lage gebracht werden muß. Folgende-Teile des Fahrzeuges, die durch Erschütterung als haptische Anzeige dienen können, kommen in Frage: das Lenkrad, der Fahrersitz oder die gesamte Fahrgastzelle. Die haptische Anzeige kann alleine oder als Ergänzung optischer oder akustischer Anzeigen verwendet werden. Mit dieser haptischen Anzeige kann beispielsweise der Zeitpunkt der Unterschreitung des Mindestabstandes von einem Hindernis angezeigt werden.

Eine Erschütterung des Lenkrades kann durch Krafteinwirkung auf die Lenksäule erreicht werden. Eine Erschütterung des Fahrersitzes kann durch Krafteinwirkung auf den Sockel, das Gestell oder das Polster des Sitzes erfolgen. Eine Erschütterung der gesamten Fahrgastzelle kann durch gezielte Einwirkung auf eines oder mehrere Teilsysteme des Fahrzeuges hervorgerufen werden: Einleitung einer zeitlich veränderlichen Kraft auf die Karosserieaufhängung, Unterbrechung des Zündvorganges, Beeinflussung der Kraftstoffzufuhr oder auch Einwirkung auf die Bremsen. Mit diesen Einwirkungsmöglichkeiten lassen sich Erschütterungen mit unterschiedlicher Intensität und mit unterschiedlichem zeitlichem Verlauf erzeugen, so daß dem Fahrer mehrstufige Abstandswarnungen übermittelt werden können.

### Vorteile der Erfindung

Die haptische Abstandswarnanzeige durch Erschütterung ruft beim Fahrer einen Sinnesreiz hervor, der ihm als natürliche Wahrnehmung vom Anstoßen an Hindernissen, wie Bordsteinen oder auch anderen Fahrzeugen, vertraut ist. Dadurch ist eine hohe Kompatibilität zwischen dem Code der Anzeige und der zugrundeliegenden Nachricht "Abstandswarnung" gegeben.

Daraus ergibt sich der Vorteil des geringen Decodierungsaufwandes für den Fahrer beim Umsetzen des Sinnesreizes in die Bedeutung der zugrundeliegenden Nachricht. Ein weiterer Vorteil folgt aus der Übermittlung der haptischen Anzeige über das Lenkrad, den Fahrersitz oder über die gesamte Fahrgastzelle. Die Aufnahme der angezeigten Information ist nicht wie bei der optischen und auch bei der akustischen Anzeige abhängig von der Ausrichtung der Aufmerksamkeit des Fahrers, außerdem ist sie nicht wie bei bisher vorgeschlagenen haptischen Anzeigen abhängig davon, daß ein Körperteil in eine spezielle Lage gebracht wird, da der Körperkontakt mit dem Lenkrad oder dem Sitz praktisch immer besteht. Vorteilhaft ist ferner, daß diese haptische Anzeige für die Abstandswarnung sowohl für die Vorwärts- als auch für die Rückwärtsfahrt verwendet werden kann. Sie eignet sich somit sowohl als Einparkhilfe als auch als Hilfe für die Kolonnenfahrt.

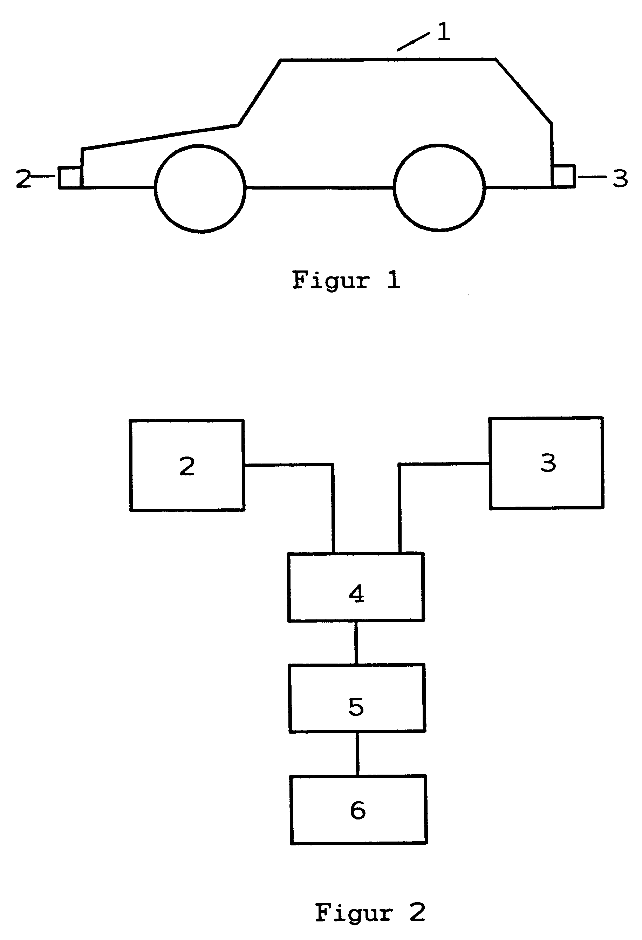

Ein Ausführungsbeispiel der Erfindung ist in Figur 1 und 2 dargestellt. Das Kraftfahrzeug 1 ist mit Abstandssensoren an der Front 2 und/oder am Heck 3 ausgestattet. Die Auswerteelektronik 4 dient zur Bestimmung der dem Fahrer anzuzeigenden Information, beispielsweise des Zeitpunkts der Unterschreitung des Mindestabstandes. Diese Kennwerte stellen die Eingangsgrößen des elektronischen Kraftstoffeinspritzsystems 5 dar, das bei Unterschreiten des Mindestabstandes bei Vorwärts- oder Rückwärtsfahrt die Einspritzventile 6 wahrend eines Zündvorganges oder während mehrerer Zündvorgänge geschlossen hält. Dadurch kommt es zu einer kurzzeitigen Absenkung der Antriebsleistung oder der Motor läuft unrund. Dies bewirkt eine ruckende Bewegung der Fahrgastzelle, die vom Fahrer als Erschütterung wahrgenommen werden kann.

## Patentansprüche

1. Verfahren und Vorrichtung zur haptischen Anzeige der Abstandswarnung im Kraftfahrzeug unter Verwendung von Abstandssensoren und einer Auswerteelektronik, die die Abstandswarnung durch Erschütterung des Lenkrades, des Fahrersitzes oder der gesamten Fahrgastzelle bewirkt, dadurch gekennzeichnet, daß durch abgestufte Intensität und/oder zeitlichen Verlauf der Erschütterung eine mehrstufige Abstandswarninformation übermittelt wird.

2. Verfahren und Vorrichtung zur haptischen Anzeige der Abstandswarnung im Kraftfahrzeug gemäß Anspruch 1, dadurch gekennzeichnet,
daß die Erschütterung des Lenkrades durch Krafteinwirkung auf die Lenksäule erfolgt.

3. Verfahren und Vorrichtung zur haptischen Anzeige der Abstandswarnung im Kraftfahrzeug gemäß Anspruch 1, dadurch gekennzeichnet,
daß die Erschütterung des Fahrersitzes durch Krafteinwirkung auf das Sitzgestell erfolgt.

4. Verfahren und Vorrichtung zur haptischen Anzeige der Abstandswarnung im Kraftfahrzeug gemäß Anspruch 1, dadurch gekennzeichnet,
daß die Erschütterung des Fahrersitzes durch Krafteinwirkung auf das Sitzpolster erfolgt.

5. Verfahren und Vorrichtung zur haptischen Anzeige der Abstandswarnung im Kraftfahrzeug gemäß Anspruch 1, dadurch gekennzeichnet,
daß die Erschütterung der Fahrgastzelle durch Krafteinwirkung auf die Aufhängung der Fahrgastzelle erfolgt.

6. Verfahren und Vorrichtung zur haptischen Anzeige der Abstandswarnung im Kraftfahrzeug gemäß Anspruch 1, dadurch gekennzeichnet,
daß die Erschütterung der Fahrgastzelle durch Unterbrechung des Zündvorganges erfolgt.

7. Verfahren und Vorrichtung zur haptischen Anzeige der Abstandswarnung im Kraftfahrzeug gemäß Anspruch 1, dadurch gekennzeichnet,
daß die Erschütterung der Fahrgastzelle durch Unterbrechung der Kraftstoffzufuhr erfolgt.

8. Verfahren und Vorrichtung zur haptischen Anzeige der Abstandswarnung im Kraftfahrzeug gemäß Anspruch 1, dadurch gekennzeichnet,
daß die Erschütterung der Fahrgastzelle durch Aktivierung der Bremsen erfolgt.

## Claims

1. Method and device for haptic display of distance warning in a motor vehicle using distance sensors and an evaluating electronic system, which effects the distance warning by vibration of the steering wheel, the driver's seat or the entire passenger cell, characterized in that multi-stage distance warning information is transmitted through the stepped intensity of and/or temporal variation in vibration.

2. Method and device for haptic display of distance warning in a motor vehicle in accordance with Claim 1, characterized in that the vibration of the steering wheel is produced by the action of force on the steering column.

3. Method and device for haptic display of distance Warning in a motor vehicle in accordance with Claim 1, characterized in that the vibration of the driver's seat is produced by the action of force on the seat frame.

4. Method and device for haptic display of distance warning in a motor vehicle in accordance with Claim 1, characterized in that the vibration of the driver's seat is produced by the action of force on the seat upholstery.

5. Method and device for haptic display of distance warning in a motor vehicle in accordance with Claim 1, characterized in that the vibration of the passenger cell is produced by the action of force on the suspension of the passenger cell.

6. Method and device for haptic display of distance warning in a motor vehicle in accordance with Claim 1, characterized in that the vibration of the passenger cell is produced by interrupting the ignition process.

7. Method and device for haptic display of distance warning in a motor vehicle in accordance with Claim 1, characterized in that the vibration of the passenger cell is produced by interrupting the fuel feed.

8. Method and device for haptic display of distance warning in a motor vehicle in accordance with Claim 1, characterized in that the vibration of the passenger cell is produced by activating the brakes.

## Revendications

1. Procédé et dispositif d'affichage tactile de l'avertissement de distance dans un véhicule automobile utilisant des capteurs de distance et un circuit électronique d'exploitation assurant l'avertissement de distance par mise en secousses du volant, du siège du conducteur ou de l'ensemble du châssis, caractérisés en ce que l'intensité graduée et/ou le chronogramme des secousses transmet une information d'avertissement de distance à plusieurs niveaux.

2. Procédé et dispositif d'affichage tactile de l'avertissement de distance dans un véhicule automobile selon la revendication 1, caractérisés en ce que la mise en secousses du volant se fait par action d'une force sur la colonne de direction.

3. Procédé et dispositif d'affichage tactile de l'avertissement de distance dans un véhicule automobile selon la revendication 1, caractérisés en ce que la mise en secousses du siège du conducteur se fait par l'action d'une force sur le bâti du siège.

4. Procédé et dispositif d'affichage tactile de l'avertissement de distance dans un véhicule automobile selon la revendication 1, caractérisés en ce que la mise en secousses du siège du conducteur se fait par action d'une force sur le rembourrage du siège.

5. Procédé et dispositif d'affichage tactile de l'avertissement de distance dans un véhicule automobile selon la revendication 1, caractérisés en ce que la mise en secousses du châssis se fait par action d'une force sur la suspension de l'habitacle.

6. Procédé et dispositif d'affichage tactile de l'avertissement de distance dans un véhicule automobile selon la revendication 1, caractérisés en ce que la mise en secousses de l'habitacle se fait par interruption de l'opération d'allumage.

7. Procédé et dispositif d'affichage tactile de l'avertissement de distance dans un véhicule automobile selon la revendication 1, caractérisés en ce que la mise en secousses de l'habitacle du véhicule se fait par coupure de l'alimentation de carburant.

8. Procédé et dispositif d'affichage tactile de l'avertissement de distance dans un véhicule automobile selon la revendication 1, caractérisés en ce que la mise en secousses de l'habitacle se fait par activation des freins.
